# EUROPÄISCHE PATENTSCHRIFT

(11) **EP 2 443 349 B1**
(45) Veröffentlichungstag und Bekanntmachung des Hinweises auf die Patenterteilung: **08.11.2017**
(21) Anmeldenummer: 10725607.5
(22) Anmeldetag: 08.06.2010
(51) Int. Cl.: F15B 21/08, F15B 13/08

(54) **MODULARES KONTROLLSYSTEM FÜR FLUIDISCHE STEUERGERÄTE**
MODULAR CONTROL SYSTEM FOR FLUIDIC CONTROL DEVICES
SYSTÈME DE COMMANDE MODULAIRE POUR APPAREIL DE RÉGULATION FLUIDIQUE

(30) Priorität: 10.06.2009 DE 202009008054 U
(43) Veröffentlichungstag der Anmeldung: 25.04.2012
(73) Patentinhaber: Bürkert Werke GmbH & Co. KG, 74653 Ingelfingen (DE)
(72) Erfinder: UNGERER, Michael, 74670 Forchtenberg (DE); KRÄMER, Florian, 74676 Niedernhall (DE); BRINZING, Tina, 74653 Künzelsau (DE); JACOB, Christof, 74613 Öhringen (DE); KEINATH, Marcus, 74670 Forchtenberg (DE); FEINAUER, Markus, 74542 Braunsbach (DE); ELMER, Stefan, 74629 Pfedelbach (DE); HOFMANN, Peter, 71120 Grafenau (DE)
(74) Vertreter: Prinz & Partner mbB
(86) Internationale Anmeldenummer: PCT/EP2010/003429
(87) Internationale Veröffentlichungsnummer: WO 2010/142419

(56) Entgegenhaltungen:
- EP-A1- 1 881 204
- DE-A1-102007 015 111
- US-A1- 2007 103 291

## Beschreibung

Die vorliegende Erfindung betrifft ein modulares Kontrollsystem für fluidische Steuergeräte, das mindestens eine Anzeige- und/oder Bedieneinheit und ein fluidisches Steuergerät umfasst.

In Industrieanlagen sind häufig eine Vielzahl unterschiedlicher fluidischer Steuergeräte, wie Ventile, Regler oder Sensoren angeordnet, an denen während eines Prozesses verschiedene Einstellungen oder Überprüfungen, wie Gerätekonfiguration, Kalibrierung, Status, Kontrolle von Messwerten und andere vorgenommen werden. Dazu sind häufig alle einzelnen Geräte mit Anzeige- und/oder Bedieneinheiten ausgestattet. Oder die Geräte weisen Aufnahmevorrichtungen für die Anzeige- und/oder Bedieneinheiten auf, die in Abhängigkeit von Art, Größe und Schnittstelle dieser, entsprechend angepasst sind.

Die DE 10 2007 015 111 A1 offenbart ein modulares Kontrollystem mit einem fluidischen Steuergerät. Das modulare Kontrollsystem weist weiterhin ein fluidtechnisches Gerät und daran lösbar befestigt ein Sensormodul mit Anzeigeeinheit auf. Das fluidtechnische Gerät hat einen Gerätespeicher, z.B. in Form eines RFID-Moduls, welcher drahtlos von dem Sensormodul ausgelesen werden kann. Zum Auslesen der Daten aus dem RFID-Modul sendet das Sensormodul eine Abfragenachricht an das RFID-Modul.

Das erfindungsgemäße Kontrollsystem ist, wie im Anspruch 1 angegeben, modular aufgebaut. Es besteht aus mindestens einer Anzeige- und/oder Bedieneinheit und ist mit einem fluidischen Steuergerät lösbar verbunden. Die Anzeige- und/oder Bedieneinheit ist über eine induktive Schnittstelle an das fluidische Steuergerät gekoppelt. Vorteilhafte Ausführungsformen sind in den Unteransprüchen angegeben.

Induktive Schnittstellen sind bekannt und werden z.B. mittels Spulensystem und Ferritkern realisiert.

Über die induktive Schnittstelle wird die Anzeige- und/oder Bedieneinheit vom fluidischen Steuergerät mit Energie versorgt. Dadurch erübrigt sich eine zusätzliche externe Spannungsversorgung. Außerdem können codierte Signale zur Informationsübertragung übermittelt werden. Vorteilhaft ist, dass die Energie- und Datenübertragung drahtlos erfolgt, was zur größeren Übersichtlichkeit in der Anlage beiträgt, weil die Anzahl der benötigten Kabel reduziert wird.

Besonders vorteilhaft ist es, die Anzeige- und/der Bedieneinheit mit einem Energiespeicherelement auszustatten. Damit können beide Komponenten des modularen Kontrollsystems als eigenständige Geräte und voneinander unabhängig betrieben werden. Das Energiespeicherelement wird aufgeladen, sobald die Anzeige- und/oder Bedieneinheit mit dem fluidischen Steuergerät oder mit einer Ladestation verbunden ist. So kann eine Datenbearbeitung oder Auswertung an der Anzeige- und/oder Bedieneinheit erfolgen ohne externe Spannungsversorgung und ohne Kontakt zum fluidischen Steuergerät.

Außerdem hat es sich als günstig erwiesen, die lösbare Verbindung zwischen der Anzeige- und/oder Bedieneinheit und dem fluidischen Steuergerät mittels Permanentmagneten zu bewerkstelligen. Dazu sind in beiden Komponenten des modularen Kontrollsystems jeweils mindestens zwei Permanentmagnete so angebracht, dass diese sich im Kontrollsystem gegenüberliegen, wobei die Magnete im fluidischen Steuergerät zu denen in der Anzeige- und/oder Bedieneinheit entgegengesetzte Polarisierungsrichtung aufweisen. Die Permanentmagnete befinden sich zu den induktiven Schnittstellen beabstandet, so dass diese nicht ungünstig beeinflusst werden.

Die Permanentmagnete ermöglichen eine selbsttätige Ausrichtung der induktiven Schnittstellen, wodurch man eine optimale Positionierung dieser bei verlustarmer Energieübertragung erreicht.

Zwischen Anzeige- und/oder Bedieneinheit und fluidischem Steuergerät können Energie und Informationen mittels Signalen übertragen werden, die vorzugsweise gemäß Miller-Codierung moduliert sind, um Energieübertragungs-lücken zu vermeiden. Die Informationsübertragung kann bidirektional erfolgen.

Die Anzeige- und/oder Bedieneinheit lässt sich, ohne dass dazu eine spezielle Aufnahmevorrichtung bereitgestellt werden müsste, an unterschiedliche fluidische Steuergeräte wie Regler, Sensoren, Ventile ankoppeln.

Mit Hilfe des beschriebenen modularen Kontrollsystems können unterschiedliche fluidische Steuergeräte von einer einzigen Anzeige- und/oder Bedieneinheit in Betrieb genommen, konfiguriert oder kalibriert werden. Daten der verschiedenen fluidischen Steuergeräte können nacheinander ausgelesen und gespeichert werden, um dann an einem räumlich von den Steuergeräten getrennten Ort ausgewertet oder bearbeitet zu werden. Über die Anzeige- und/oder Bedieneinheit können auch auf einfache Weise Software-updates auf die fluidischen Steuergeräte gespielt werden.

Weitere Vorteile und Ausgestaltungen der Erfindung werden anhand der beigefügten Figuren beschrieben. Hierbei zeigen:
**Fig. 1** Schematische Explosionsdarstellung des modularen Kontrollsystems für fluidische Steuergeräte;
**Fig. 2** Prinzipskizze eines Ausführungsbeispiels des modularen Kontrollsystems.

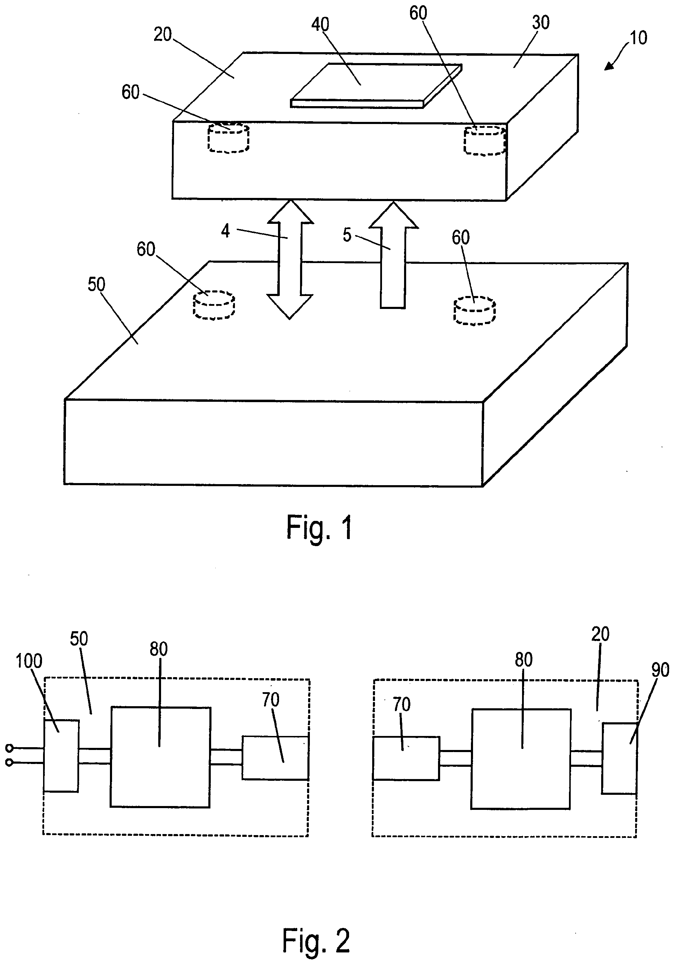

**Fig. 1** zeigt eine schematische Explosionsdarstellung des modularen Kontrollsystems 10, bestehend aus einer Anzeige- und/oder Bedieneinheit 20, deren Oberseite 30 eine Anzeigevorrichtung wie beispielsweise ein Display 40 aufweist, sowie einem fluidischem Steuergerät 50.

In beiden Modulen, Anzeige- und/oder Bedieneinheit 20 und fluidischem Steuergerät 50, sind auf gegenüberliegenden Seiten Permanentmagnete 60 mit entgegengesetzter Polarisierungsrichtung angeordnet, so dass die beiden Module mittels Magnetkraft miteinander lösbar verbunden werden können. Es ist keine spezielle Aufnahmevorrichtung für die Anzeige- und/oder Bedieneinheit 20 am fluidischen Steuergerät 50 notwendig. Diese Art der Verbindung der beiden Module miteinander ist im Wesentlichen unabhängig von deren geometrischer Ausgestaltung.

Wie in **Fig. 2** dargestellt, sind im modularen Kontrollsystem 10 auf gegenüberliegenden Seiten der Anzeige- und/oder Bedieneinheit 20 und des fluidischen Steuergeräts 50 jeweils eine induktive Schnittstelle 70 angeordnet, die miteinander koppelbar sind. Die induktiven Schnittstellen 70 sind mit zugehörigen Ansteuerelektroniken 80 verbunden.

Die Anzeige- und/oder Bedieneinheit 20 weist ein Energiespeicherelement 90 wie einen Akku oder eine Batterie auf, wohingegen das fluidische Steuergerät 50 an eine externe Spannungsversorgung 100 angeschlossen ist. Sobald die Anzeige- und/oder Bedieneinheit 20 mit dem fluidischen Steuergerät 50 verbunden ist, findet über die induktiven Schnittstellen 70 eine Energieübertragung statt, und die Anzeige- und/oder Bedieneinheit 20 kann somit betrieben werden.

Vorzugsweise handelt es sich beim Energiespeicherelement 90 um einen Akku, der in der Kontaktsituation von Anzeige- und/oder Bedieneinheit 20 und fluidischem Steuergerät 50 parallel aufgeladen wird. Dadurch können die beiden Komponenten Anzeige- und/oder Bedieneinheit 20 und fluidisches Steuergerät 50, wenn das Energiespeicherelement 90 geladen ist, autark und voneinander unabhängig betrieben werden. Der Aufladevorgang der Anzeige- und/oder Bedieneinheit 20 kann selbstverständlich nicht nur am fluidischen Steuergerät 50 sondern auch an einer beliebigen anderen Ladestation stattfinden. Dadurch können beispielsweise Auswertungen, von zur Anzeige- und/oder Bedieneinheit 20 übertragenen Messdaten, an einem vom fluidischen Steuergerät 50 räumlich getrennten Ort durchgeführt werden.

Mittels der Permanentmagnete 60 werden die induktiven Schnittstellen 70 auf sich gegenüberliegenden Seiten von Anzeige- und/oder Bedieneinheit 20 und fluidischem Steuergerät 50 selbsttätig ausgerichtet, wodurch eine optimale Positionierung dieser und somit eine verlustarme Energieübertragung erreicht wird. Die Permanentmagnete 60 sind des Weiteren im Kontrollsystem für fluidische Steuergeräte 10 so angeordnet, dass sie von den induktiven Schnittstellen 70, gebildet aus Spulensystem mit Ferritkern, entfernt sind, so dass diese sich nicht ungünstig beeinflussen.

Im modularen Kontrollsystem für fluidische Steuergeräte 10 werden Energie und Informationen zwischen Anzeige- und/oder Bedieneinheit 20 und fluidischem Steuergerät 50 über die induktiven Schnittstellen 70 mittels Signalen übertragen, die vorzugsweise gemäß Miller-Codierung moduliert sind. Diese Art der Signalcodierung hat den Vorteil, dass es nicht bei Auftreten von mehreren 0 Bits hintereinander zu einer unerwünschten Energieübertragungslücke kommt.

Ein weiterer Vorteil des erfindungsgemäßen Kontrollsystems für fluidische Steuergeräte 10 ist, dass dieselbe Anzeige- und/oder Bedieneinheit 20 bei unterschiedlichen fluidischen Steuergeräten 50 wie Regler, Sensoren, Ventilen und anderen verwendet werden kann, und dass nicht für jedes fluidische Steuergerät eine separate Anzeige- und/oder Bedieneinheit zur Verfügung gestellt werden muss.

## Patentansprüche

1. Modulares Kontrollsystem (10) mit einem fluidischen Steuergerät (50), und mit wenigstens einer Anzeige- und/oder Bedieneinheit (20), die eine induktive Schnittstelle (70) aufweist und in einer solchen Relativstellung zu dem fluidischen Steuergerät (50) lösbar mit diesem verbindbar ist, dass die induktive Schnittstelle (70) mit einer entsprechenden Schnittstelle (70) des Steuergeräts (50) gekoppelt ist, wobei über die induktiven Schnittstellen (70) codierte Signale übertragbar sind, die sowohl Information als auch Energie vom Steuergerät (50) zur Anzeige- und/oder Bedieneinheit (20) zum Betreiben derselben beinhalten, **dadurch gekennzeichnet, dass** Permanentmagnete (60) in der Anzeige- und/oder Bedieneinheit (20) sowie im fluidischen Steuergerät (50) in Bezug auf die induktiven Schnittstellen (70) so angeordnet sind, dass die induktiven Schnittstellen (70) selbsttätig zueinander ausgerichtet werden.

2. Modulares Kontrollsystem (10) nach Anspruch 1, **dadurch gekennzeichnet, dass** die Anzeige- und/oder Bedieneinheit (20) ein Energiespeicherelement (90) aufweist.

3. Modulares Kontrollsystem (10) nach Anspruch 1 und 2 **dadurch gekennzeichnet, dass** die Anzeige- und/oder Bedieneinheit (20) und das fluidische Steuergerät (50) jeweils mindestens zwei der Permanentmagnete (60) aufweisen, die im modularen Kontrollsystem (10) einander gegenüberliegend angeordnet sind und deren Polarisierungsrichtung entgegengesetzt ist.

4. Modulares Kontrollsystem (10) nach Anspruch 1 und 2, **dadurch gekennzeichnet, dass** Energie und Informationen zwischen Anzeige- und/oder Bedieneinheit (20) und fluidischem Steuergerät (50) mittels Signalen übertragbar sind, die vorzugsweise gemäß Miller-Codierung moduliert sind.

5. Modulares Kontrollsystem (10) nach einem der vorstehenden Ansprüche **dadurch gekennzeichnet, dass** die Anzeige- und/oder Bedieneinheit (20) an unterschiedliche fluidische Steuergeräte (50) wie zum Beispiel Regler, Sensoren, Ventile ankoppelbar ist.

## Claims

1. A modular control system (10) comprising a fluidic control device (50) and at least one display and/or operating unit (20), which comprises an inductive interface (70) and is capable of being removably connected to the fluidic control device (50) in such a relative position that the inductive interface (70) is coupled to a respective interface (70) of the control device (50), wherein encoded signals are transmittable by means of the inductive interfaces (70), which contain both information and energy from the control device (50) to the display and/or operating unit (20) in order to operate the same, **characterized in that** permanent magnets (60) are arranged in the display and/or operating unit (20) and in the fluidic control device (50) in relation to the inductive interfaces (70) in a way that the inductive interfaces (70) are automatically aligned with each other.

2. The modular control system (10) according to claim 1, **characterized in that** the display and/or operating unit (20) comprises an energy storage element (90).

3. The modular control system (10) according to claim 1 and 2, **characterized in that** the display and/or operating unit (20) and the fluidic control device (50) comprise at least two of the permanent magnets (60), respectively, which are arranged opposite to one another in the modular control system (10) and the polarization direction thereof is opposed to one another.

4. The modular control system (10) according to claim 1 and 2, **characterized in that** energy and information are transmittable between the display and/or operating unit (20) and the fluid control device (50) by means of signals, which are preferably modulated according to Miller encoding.

5. The modular control system (10) according to one of the preceding claims, **characterized in that** the display and/or operating unit (20) is capable of being coupled to various fluidic control devices (50), as for example regulating means, sensors, valves.

## Revendications

1. Système de contrôle modulaire (10), comportant un dispositif de commande fluidique (50) et au moins une unité d'affichage et/ou d'actionnement (20) qui présente une interface inductive (70) et qui est apte à être reliée de manière détachable au dispositif de commande fluidique (50) dans une position relative par rapport à celui-ci telle que l'interface inductive (70) est couplée à une interface correspondante (70) du dispositif de commande (50), des signaux codés étant aptes à être transmis par l'intermédiaire des interfaces inductives (70), lesquels contiennent des informations et de l'énergie du dispositif de commande (50) vers l'unité d'affichage et/ou d'actionnement (20) pour la mise en oeuvre de celle-ci, **caractérisé en ce que** des aimants permanents (60) sont agencés dans l'unité d'affichage et/ou d'actionnement (20) et dans le dispositif de commande fluidique (50) par rapport aux interfaces inductives (70) de telle sorte que les interfaces inductives (70) sont automatiquement alignées l'une sur l'autre.

2. Système de contrôle modulaire (10) selon la revendication 1, **caractérisé en ce que** l'unité d'affichage et/ou d'actionnement (20) présente un élément d'accumulation d'énergie (90).

3. Système de contrôle modulaire (10) selon les revendications 1 et 2, **caractérisé en ce que** l'unité d'affichage et/ou d'actionnement (20) et le dispositif de commande fluidique (50) présentent chacun au moins deux des aimants permanents (60) qui sont agencés l'un en face de l'autre dans le système de contrôle modulaire (10) et dont les sens de polarisation sont opposés.

4. Système de contrôle modulaire (10) selon les revendications 1 et 2, **caractérisé en ce que** de l'énergie et des informations peuvent être transmises entre l'unité d'affichage et/ou d'actionnement (20) et le dispositif de commande fluidique (50) au moyen de signaux qui sont de préférence modulés selon un codage Miller.

5. Système de contrôle modulaire (10) selon l'une des revendications précédentes, **caractérisé en ce que** l'unité d'affichage et/ou d'actionnement (20) est apte à être couplée à différents dispositifs de commande fluidiques (50 tels que des régulateurs, des capteurs, des vannes.
